# EUROPÄISCHE PATENTANMELDUNG

(11) **EP 3 018 454 A1**
(43) Veröffentlichungstag der Anmeldung: **11.05.2016**
(21) Anmeldenummer: 14192511.5
(22) Anmeldetag: 10.11.2014
(51) Int. Cl.: G01F 1/66, G01F 1/708, G01N 21/53, G01N 21/63

(54) **Strömungsmessverfahren**

(71) Anmelder: Enrichment Technology Company Ltd. Zweigniederlassung Deutschland, 52409 Jülich (DE)
(72) Erfinder: Jung, Ralph, 52428 Jülich (DE); Kopper, Klaus Peter, 52064 Aachen (DE)
(74) Vertreter: Jostarndt, Hans-Dieter

(57) **Zusammenfassung**

Die Erfindung betrifft ein Strömungsmessverfahren und ein entsprechendes System zur Ausführung dieses Verfahrens. Das System umfassend zur berührungslosen optischen Messung von Strömungseigenschaften eines strömenden Mediums aus Molekülen (G) einer Molekülart oder aus einem Gemischen (G) aus unterschiedlichen Molekülarten eine Anlage (1) zur Führung des strömenden Mediums (G) entlang einer gewünschten Richtung, eine an einer ersten nicht störenden Position (P1) befindlich angeordnete Erzeugungslichtquelle (2) zum berührungslosen Erzeugen (EZ) von Nachweismolekülen (NG) durch Umwandlung zumindest eines ausreichenden Anteils der Moleküle (G) mindestens einer Molekülart in Nachweismoleküle (NG) einer davon unterschiedlichen Molekülart mittels Photomodifikation, vorzugsweise durch Photodissoziation, in dem strömenden Medium an einem Erzeugungsort (EO) zu einem Erzeugungszeitpunkt (ET), ein an einer zweiten Position (P2) angeordnetes optisches Messsystem (3) zum berührungslosen Nachweisen (N) der zuvor erzeugten Nachweismoleküle (NG) als Bestandteil des strömenden Mediums an einem Nachweisort (NO) zu einem Nachweiszeitpunkt (NT), und einer mit der Erzeugungslichtquelle und dem optischen Messsystem geeignet verbundenen Analyseeinheit (4) zum Bestimmen (BS) der Strömungseigenschaften des strömenden Mediums aus den räumlichen und zeitlichen Korrelationen zwischen Erzeugungsort (EO) und Nachweisort (NO) und zwischen Erzeugungszeitpunkt (ET) und Nachweiszeitpunkt (NT) der Nachweismoleküle (NG) im strömenden Medium.

## Beschreibung

### Gebiet der Erfindung

Die Erfindung bezieht sich auf ein Strömungsmessverfahren und auf ein entsprechendes System zur Ausführung dieses Verfahrens.

### Hintergrund der Erfindung

Die Kenntnis der Strömungsparameter von Gasen und anderen Medien, beispielsweise Fluide, bildet in zahlreichen industriellen Anwendungsbereichen eine Grundlage für die Prozessführung. Die Genauigkeit der Strömungsmessung hängt bei vielen Verfahren stark vom lokalen Strömungsprofil ab. Bei den meisten Anwendungsfällen ist dieses Strömungsprofil jedoch unbekannt. Messverfahren, die im Gasstrom des zu messenden Gases positioniert werden müssen, ragen in die Strömung hinein und beeinflussen damit die Messgröße durch ihre Anwesenheit selbst. Daher wären berührungslose Messsysteme, die außerhalb des strömenden Gases angeordnet werden können und somit nicht-invasiv für den Gasstrom sind, wünschenswert.

Um Strömungsvorgänge in Fluiden oder Gasen nicht-invasiv zu quantifizieren, werden daher häufig teilchenbasierte Lasermessmethoden eingesetzt, wobei detektierbare Teilchen von außen in den zu untersuchenden Gasstrom hinzugegeben werden und das Strömungsverhalten der Teilchen bestimmt wird. Das Strömungsverhalten der Teilchen wird dann dem nicht bekannten Strömungsverhalten des Gases gleichgesetzt und dieses dadurch indirekt bestimmt. Allerdings bedeutet das gezielte Zusetzen solcher Teilchen in einen bestehenden Gasstrom einen hohen technischen Aufwand. Hierbei haben die in den Gasstrom hinzugegebenen Teilchen (beispielsweise Feststoffe oder Flüssigkeiten wie TiO₂, Al₂O₃ oder Öltröpfchen) für eine notwendige Messgenauigkeit ihres Strömungsverhaltens eine relativ hohe Dichte, die in manchen Anwendungen bis zu vier Größenordnungen über der des umgebenden Gases liegen kann. Damit die Teilchen im strömenden Gas ein gutes Teilchenfolgevermögen besitzen, was das Vermögen der Teilchen (oder generell der zu detektierenden Zugaben) bezeichnet, mit dem Gasstrom in möglichst gleicher Weise mitzuströmen, müssen diese Teilchen möglichst klein sein. Je kleiner die Teilchen sind, desto unzuverlässiger können sie optisch detektiert werden, im Extremfall ist keine optische Detektion mehr möglich. Würden die Teilchen aus Gründen der guten Sichtbarkeit dagegen eine ausreichende Größe besitzen, wäre das Teilchenfolgevermögen zu schlecht, um aus dem Strömungsverhalten der Teilchen auf das Strömungsverhalten des Gases schließen zu können. Des Weiteren besitzen zugegebene Teilchen eine Größenverteilung, die lediglich ein über die vorhandene Größenverteilung streuendes Strömungsverhalten liefern kann, was die Korrelation zu dem tatsächlichen Strömungsverhalten des Gases zusätzlich verschlechtert. Außerdem ist nach dem Zusatz der Teilchen deren Position im strömenden Gase nicht mehr beeinflussbar, so dass sich die Teilchen gegebenenfalls außerhalb eines interessanten Strömungsbereiches des Gases bewegen und dieser somit der indirekten Strömungsmessung nicht zugänglich ist. Des Weiteren können diese zugesetzten Teilchen die Gasanlagen oder das Gas selbst verschmutzen, was bei bestimmten Anwendungen ein großes Problem beziehungsweise einen großen Reinigungsaufwand darstellen kann. Beispielsweise könnte die chemische Zusammensetzung der Teilchen eventuell nicht kompatibel zum zu untersuchenden Gas sein.

Es ist daher wünschenswert, ein Verfahren und ein entsprechendes System zur Verfügung zu haben, mit dem sich das Strömungsverhalten eines strömenden Gases ohne Beeinflussung des Strömungsverhaltens durch das Messverfahren messen lässt und dieses Verfahren zudem präzisere Daten an den jeweils gewünschten Orten unabhängig von der Gasführung des Gasstroms liefern kann.

### Zusammenfassung der Erfindung

Es ist eine Aufgabe der vorliegenden Erfindung, ein Verfahren zur Verfügung zu stellen, mit dem sich das Strömungsverhalten eines strömenden Mediums ohne wesentliche Beeinflussung des Strömungsverhaltens durch das Messverfahren messen lässt und dieses Verfahren zudem präzisere Daten an den jeweils gewünschten Orten unabhängig von der Führung des strömenden Medium liefern kann. Eine weitere Aufgabe liegt darin, ein System zur Ausführung dieses Verfahrens zu Verfügung zu stellen.

Diese Aufgabe wird gelöst durch ein Verfahren zur berührungslosen optischen Messung von Strömungseigenschaften eines strömenden Mediums aus Molekülen einer Molekülart oder aus einem Gemisch aus unterschiedlichen Molekülarten umfassend die Schritte eines berührungslosen Erzeugens von Nachweismolekülen durch Umwandlung zumindest eines ausreichenden Anteils der Moleküle mindestens einer Molekülart mittels Photomodifikation, vorzugsweise durch Photodissoziation, in dem strömenden Medium durch eine nicht den Strom störende Erzeugungslichtquelle in Nachweismoleküle einer davon unterschiedlichen Molekülart an einem Erzeugungsort zu einem Erzeugungszeitpunkt, eines berührungsloses Nachweisen der zuvor erzeugten Nachweismoleküle als Bestandteil des strömenden Mediums durch ein optisches Messsystem an einem Nachweisort zu einem Nachweiszeitpunkt, und eines Bestimmen der Strömungseigenschaften des strömenden Mediums aus den räumlichen und zeitlichen Korrelation zwischen Erzeugungsort und Nachweisort und zwischen Erzeugungszeitpunkt und Nachweiszeitpunkt der Nachweismoleküle im strömenden Medium. Hierbei kann das Medium beispielsweise ein Gas oder ein Fluid sein. Diese Bestimmung kann beispielsweise mittels einer entsprechend ausgestatteten Analyseeinheit, beispielsweise einem entsprechend programmierten Prozessor, durchgeführt werden, dem die Nachweisdaten bezüglich Nachweisort und Nachweiszeitpunkt sowie der Erzeugungszeitpunkt und der Erzeugungsort übermittelt werden. Damit die Erzeugungslichtquelle den Strom des Medium nicht stört, kann sie sich an einem Ort im Medium befinden, von dem sie keinen messbaren Einfluss auf die Strömungseigenschaften am Erzeugungs- und Nachweisorten besitzt oder die Erzeugungslichtquelle kann außerhalb des strömenden Medium angeordnet sein. Die Bestimmung der Vektorkomponenten der Strömung erfolgt durch Kenntnis der Strahllage des Lichts der Erzeugungslichtquelle oder alternativ über Korrelation von Doppelbildaufnahmen wie beispielsweise beim PIV-Verfahren. Unter Korrelation ist in einfachen Fällen eine Differenz zu verstehen.

Das erfindungsgemäße Verfahren zeichnet sich dadurch aus, dass es das Strömungsverhalten eines strömenden Medium ohne merkliche Beeinflussung des Strömungsverhaltens durch das Messverfahren messen kann und zudem präzisere Daten an den jeweils gewünschten Orten unabhängig von der Führung des strömenden Medium liefert. Das Verfahren ist zudem auf Ströme des Mediums verschiedenster Dichten oder Dichtebereiche, sofern die Nachweismoleküle berührungslos (beispielsweise optisch) erkannt werden können. Eine geringere Dichte der Nachweismoleküle kann durch eine größere Sichtbarkeit der Nachweismoleküle am Nachweisort ausgeglichen werden. Der Ort, wo die Nachweismoleküle durch das optische Messsystem nachgewiesen werden, wird als Nachweisort bezeichnet. Die Zeit, zu der das passiert, wird als Nachweiszeitpunkt bezeichnet. Die Nachweismoleküle können dabei als separate Moleküle nachgewiesen werden oder als Zusammenballung von mehreren Nachweismolekülen, sogenannte Cluster. Sofern die Nachweismoleküle auf Molekülebene nachgewiesen werden, könnte dies beispielsweise durch eine Anregung von Fluoreszenz der Nachweismoleküle geschehen, während das umgebende Medium bei dieser Beleuchtung nicht zu einer Fluoreszenz angeregt wird oder aufgrund seiner spektroskopischen Eigenschaften von den Nachweismolekülen zu unterscheiden ist. Je nach Art des umgebenden Mediums und Zusammensetzung des Nachweismoleküls kann der Fachmann eine geeignete Anregung der Nachweismoleküle auswählen, um deren Präsenz zu einem bestimmten Zeitpunkt am Nachweisort nachweisen zu können. Eine dafür geeignete Messtechnik ist beispielsweise die sogenannte laserinduzierte Fluoreszenzspektroskopie. Die Zusammenballungen (Clusterbildung oder Schneebildung) aus Nachweismolekülen können im Vergleich zu einzelnen Nachweismolekülen unterschiedliche Größen besitzen, so dass diese zusammengeballten Nachweismoleküle im Weiteren auch als Partikel oder Teilchen (aus Nachweismolekülen) bezeichnet werden. Der Nachweis kann dabei durch intrinsische Eigenschaften des Nachweismoleküls selber oder durch Eigenschaften der Nachweismoleküle in der Zusammenballung erfolgen. Beispielsweise könnten die Partikel oder Teilchen aus Nachweismolekülen Licht streuen oder reflektieren, wodurch diese Partikel oder Teilchen dann nachgewiesen würden. In einer anderen Ausführungsform könnten die Partikel oder Teilchen auch dadurch nachgewiesen werden, dass sie gerade manche Eigenschaften wie das umgebende Medium nicht mehr besitzen. Beispielsweise könnte das umgebende Medium fluoreszierend sein und die Partikel oder Teilchen nicht. So könnte beispielsweise durch eine geeignete Belichtung das die Partikel oder Teilchen umgebende Medium am Nachweisort zur Fluoreszenz angeregt werden, wobei die nicht fluoreszierenden Partikel oder Teilchen aus Nachweismolekülen als "schwarze" Punkte in dem umgebenden fluoreszierenden Medium nachgewiesen würden. Als "schwarze Punkte" werden dabei alle Punkte oder Bereiche bezeichnet, deren Intensität erkennbar geringer (im Extremfall gleich null) als die des umgebenden Mediums ist. Aufgrund der Gesamt-Impulserhaltung auch der sich zusammenballenden Teilchen aus Nachweismolekülen (Clusterung) ist das erfindungsgemäße Verfahren ebenso auf geclusterte Teilchen anwendbar, selbst bei hochverdünnten Gasströmungen hier mit einem Gas als Medium mit einer Dichte von weniger als 100mbar.

Ein strömendes Medium bezeichnet hierbei ein Medium, das sich mit einer bestimmten Geschwindigkeit entlang einer Richtung, die Strömungsrichtung, bewegt. Diese Bewegung kann innerhalb eines Leitungssystems für das Medium, beispielsweise ein Rohrsystem, erfolgen.

Der Ausdruck Molekülart bezeichnet hierbei jeweils ein Molekül, das sich aufgrund seiner chemischen Struktur von einem anderen Molekül unterscheidet, welches dann zu einer anderen Molekülart gehört. Der Ausdruck Nachweismolekül bezeichnet dabei ein Molekül einer Molekülart, das mittels des optischen Messsystem detektiert wird, also das Molekül, mit dem nachgewiesen wird, wie das Strömungsverhalten des strömenden Mediums als Gesamtheit ist. Das Nachweismolekül kann dabei ein Teil oder Bruchstück des Molekül sein, aus dem es erzeugt wird oder es kann das Molekül, aus dem es erzeugt wird neben weitern Bestandteilen umfassen. Das Nachweismolekül kann auch in Form einer Zusammenballung zu einem Teilchen oder Agglomerat aus mehreren Nachweismolekülen im Medium (beispielsweise ein Gas oder Fluid) vorhanden sein.

Der Ausdruck Photomodifikation bezeichnet die Erzeugung eines Nachweismoleküls aus einem oder mehreren in der Strömung des Mediums vorhandenen Molekülen durch Bestrahlung der Moleküle mit Licht einer geeigneten Wellenlänge (Energie). Der Ort, an dem die Erzeugung stattfindet, wird als Erzeugungsort bezeichnet. Der Zeitpunkt, an dem die Erzeugung stattfindet, wird als Erzeugungszeitpunkt bezeichnet. Hierbei entspricht der Erzeugungsort dem Ort, wo das photomodifizierende Licht vorhanden ist, insbesondere wo das photomodifizierende Licht gerichtet oder fokussiert ist, und somit die größte Photonendichte (Energiedichte) besitzt. Hierbei umfasst der Begriff Photomodifikation einerseits die Photodissoziation, die einen angeregt ablaufenden Vorgang der Teilung einer chemischen Verbindung (Molekülart) in zwei oder mehrere Moleküle, Atome oder Ionen aufgrund der Absorption von energiereicher Strahlung, beispielsweise UV-Strahlung, bezeichnet, wie in der nachfolgenden Gleichung schematisch dargestellt ist:

XₘYₙ → XₘYₙ₋ₓ + xY

Hierbei besteht das Ausgangsmolekül im Medium beispielsweise aus m Atomen des Elements oder der Elementkombination X und aus n Atomen des Elements oder der Elementkombination Y. Mittels energiereicher Strahlung wird dieses Molekül beispielsweise aufgespalten in m Atomen des Elements oder der Elementkombination X und aus (n-x) Atomen des Elements oder Elementkombination Y sowie den abgespaltenen Rest aus x Atomen des Elements oder der Elementkombination Y. Die Wellenlänge des zur Photodissoziation verwendeten Lichts der Erzeugungslichtquelle muss dabei auf die Absorptionscharakteristik der zu dissoziierenden Verbindung im Molekül angepasst sein.

Der Begriff "Photomodifikation" umfasst außerdem auch die Bildung eines neuen Moleküls als Nachweismolekül aufgrund Anregung eines Moleküls durch Absorption eines oder mehrerer Photonen des Lichts mit anschließender Reaktion mit einem oder mehreren anderen Molekülen. Eine solche Reaktion ist durch die nachfolgende Gleichung schematisch dargestellt:

XₘYₙ → (XₘYₙ)*

(XₘYₙ)* + (XₘYₙ)* → X₂ₘY₂ₙ bzw. (XₘYₙ)₂

In diesem Beispiel wäre das Molekül X₂ₘY₂ₙ beziehungsweise (XₘYₙ)₂ das am Erzeugungsort durch Photomodifikation erzeugte Nachweismolekül, das am Nachweisort durch das optische Messsystem nachgewiesen wird. Die Bildung von Nachweismolekülen kann auch aus den Spaltprodukten einer erfolgten Photodissoziation eines oder mehrerer Moleküle erfolgen. Eine solche Reaktion ist durch die nachfolgende Gleichung schematisch dargestellt:

XₘYₙ → XₘYₙ₋ₓ + xY

XₘYₙ₋ₓ + XₘYₙ₋ₓ → X₂mY₂ₙ₋₂ₓ bZW. (XₘYₙ₋ₓ)₂

In diesem Beispiel wäre das Molekül X₂ₘY₂ₙ₋₂ₓ beziehungsweise (XₘYₙ₋ₓ)₂ das am Erzeugungsort durch Photomodifikation erzeugte Nachweismolekül, das am Nachweisort durch das optische Messsystem nachgewiesen wird. Für die Bestimmung der Strömungsbedingungen aus den Nachweisdaten der am Nachweisort nachgewiesenen Nachweismoleküle ist es unerheblich, ob die je nach Art der ablaufenden Photomodifikation erzeugten Nachweismoleküle direkt am Erzeugungsort oder zu einem beliebigen Zeitpunkt zwischen Erzeugungsort und Nachweisort entstehen. Die Molekülangaben XₘYₙ₋ₓ, X₂ₘY₂ₙ, (XₘYₙ)₂, X₂ₘY₂ₙ₋₂ₓ und (XₘYₙ₋ₓ)₂ für unterschiedliche Nachweismoleküle sind hier ausschließlich beispielhaft zu verstehen. Je nach Zusammensetzung und Art des Mediums können die voranstehend dargestellten prinzipiellen Reaktionsabläufe auch anders ablaufen und zu anderen hier nicht dargestellten Nachweismolekülen führen. Insbesondere können die Moleküle und Nachweismoleküle jeweils auch aus einem einzigen Element oder Elementkombination oder aus mehr als zwei verschiedenen Elementen oder Elementkombinationen bestehen. Entscheidend ist lediglich, dass das Nachweismolekül ein Molekül ist, das im ursprünglichen Medium mit seinen physikalischen Eigenschaften so nicht vorhanden und somit charakteristisch für den Entstehungsort ist und unabhängig von dem umgebenden Medium am Nachweisort nachgewiesen werden kann. Die jeweiligen Bindungsenergien oder Anregungsenergien in den Molekülen und die Lichtquellen mit den entsprechenden Wellenlängen sind dem Fachmann bekannt, so dass er die für die Erzeugung des jeweiligen gewünschten Nachweismoleküls benötigte Energie bestimmen und eine entsprechend energiereiche Lichtquelle wählen kann.

Vorteilhafterweise bilden das so durch Photomodifikation erzeugte Nachweismolekül mit anderen dieser Moleküle eine Zusammenballung (Wechselwirkung der Nachweismoleküle miteinander), beispielsweise Cluster oder Aerosole, wodurch diese Cluster eher als solider Körper denn als Gase im Medium zu betrachten sind. Je größer ein solcher Cluster ist, desto einfacher lässt er sich optisch erkennen und aus seiner bestimmten Bewegung auf das Strömungsverhalten des (optisch nicht sichtbaren) Mediums schließen. Das erfindungsgemäße Verfahren eignet sich dabei besonders für Medien, die bei geeigneter Photomodifikation ein Nachweismolekül bilden können, das rasch mit anderen Nachweismolekülen zu Stäuben oder Rauch, beispielsweise für Gas als das Medium, kondensiert, insbesondere wenn diese Cluster eine geringe Dichte besitzen und gegenüber dem umgebenden Gas als Medium chemisch inert oder resistent sind. Dieses Verfahrens ist auch für hochverdünnte Gase anwendbar. Die Clusterbildung kann hierbei beispielsweise nach folgendem Schema ablaufen:

XₘYₙ₋ₓ + XₘYₙ₋ₓ → (XₘYₙ₋ₓ)₂

(XₘYₙ₋ₓ)₂ + XₘYₙ₋ₓ → (XₘYₙ₋ₓ)₃

(XₘYₙ₋ₓ)ᵢ + (XₘYₙ₋ₓ)ⱼ → (XₘYₙ₋ₓ)ₚ₌ᵢ₊ⱼ

Die Cluster können insbesondere als Polymere, die über Komplexbildung aus Monomeren entstehen, vorliegen.

Der Ausdruck "berührungslos" bezeichnet hierbei die Eigenschaft, dass das Medium nicht in einen störenden oder gar die Messung beeinflussenden mechanischen Kontakt mit einem Körper zur Erzeugung des Nachweismoleküls oder zur Messung der Strömungseigenschaften wie beispielsweise bei mechanischen Drehzahlströmungsmessern kommt. Beispielsweise ist die Bestrahlung des Mediums mit elektromagnetischen Wellen ein berührungsloses Verfahren, das zur Photomodifikation eines Moleküls führen kann. Das Nachweisen geschieht ebenfalls berührungslos mittels eines optischen Messsystems. Optische Systeme arbeiten auch mittels elektromagnetischer Wellen, ohne dass ein mechanischer Kontakt zu den jeweiligen Medien oder Partikel oder Teilchen hergestellt wird. Dafür geeignete Verfahren sind beispielsweise laserinduzierte Fluoreszenzspektroskopie (oder laserinduzierte Fluorescence Velocimetry), PIV (die sogenannte Particle Image Velocimetry) oder MTV (die sogenannte Molecular Tagging Velocimetry).

In einer Ausführungsform werden die Betriebseigenschaften der Erzeugungslichtquelle so angepasst, dass die erzeugten Nachweismoleküle zumindest bis zum Nachweiszeitpunkt ein Teilchenfolgevermögen haben, das die Nachweismoleküle im Wesentlichen mit dem gleichen Strömungsverhalten wie das strömende Medium im strömenden Medium mitströmen lässt. Das Teilchenfolgevermögen bezeichnet die Eigenschaft von Teilchen (oder Partikeln), sich wie das umgebende Medium im Strom des Mediums zu verhalten und so das möglichst gleiche Strömungsverhalten im umgebenden Medienstrom zu zeigen. Der Begriff "im Wesentlichen" bezieht sich auf das Strömungsverhalten der Nachweismoleküle im Rahmen der Messgenauigkeit der optischen Messung zumindest bis zum Ende der optischen Messung (Nachweiszeitpunkt). Ein mögliches anderes Strömungsverhalten / geringeres Teilchenfolgevermögen soll dabei so wenig von dem Strömungsverhalten des umgebenden Mediums abweichen, so dass dieser Unterschied im Bereich der Messgenauigkeit liegt. Gerade bei hohen Strömungsdynamiken ist ein hohes Teilchenfolgevermögen wichtig für eine zuverlässige Messung des Medienstroms, insbesondere von lokalen Strömungen im Strom des Mediums. Insbesondere bei Strömungen von Gas als das Medium in kleinen Druckbereichen beispielsweise in der Größenordnung von 100mbar müssten die Teilchen durch geeignete Anpassung der Betriebseigenschaften der Erzeugungslichtquelle entweder entsprechend klein gemacht werden oder Teilchen erzeugt werden, die Cluster erzeugen, die eine geringe Dichte besitzen und somit der Strömung leicht folgen und nicht durch ihr Gewicht aus der Strömung hinausgedrängt werden. Eine gute Sichtbarkeit durch Clusterung und ein gutes Teilchenfolgevermögen ist erreicht, wenn die Nachweismoleküle und die daraus entstehenden Clustern aus Nachweismolekülen zumindest längere Zeit im strömenden Medium schweben. Dies kann beispielsweise bei fluorierten Molekülen wie UF₆, SF₆, MoF₆, ReF₆, WoF₆ oder anderen Molekülen, die in Folge von Photodissoziation zu UF₅, SF₅, MoF₅, ReF₅, WoF₅ oder anderen Molekülen zumindest dissoziieren und danach wie es beispielsweise bei UF₆ oder SF₆ der Fall ist, Feststoffe beziehungsweise Cluster bilden, angewendet werden. Sofern die Nachweismoleküle sich nicht zusammenballen, sondern mittels Fluoreszenzmethoden am Nachweisort als Moleküle nachgewiesen werden, ist das Teilchenfolgevermögen im umgebenden Medium unendlich gut, da die Nachweismoleküle aufgrund ihrer weiterhin molekularen Struktur mit dem gleichen Strömungsverhalten wie das strömende Medium im strömenden Medium mitströmen.

In einer weitern Ausführungsform werden daher die Betriebseigenschaften der Erzeugungslichtquelle so angepasst, dass die erzeugten Nachweismoleküle zu Teilchen oder Partikeln kondensieren oder clustern, deren Größen zumindest bis zum Nachweiszeitpunkt eine Schwellengröße nicht überschreiten, ab der die kondensierten Teilchen oder Partikel im strömenden Medium das Teilchenfolgevermögen verlieren. Beispielsweise kann ein solches verringertes Teilchenfolgevermögen zu einem Absinken der Nachweismoleküle im Medium führen. Wie groß diese Schwellengröße in der jeweiligen Anwendung ist, hängt insbesondere von der Art des Mediums, der Moleküle und Nachweismoleküle und deren physikalischen Eigenschaften wie Dichte und Gewicht sowie von den Strömungsbedingungen zwischen Erzeugungs- und Nachweisort der Nachweismoleküle ab. Mit Hilfe der Photomodifikation wird der Zeitpunkt, zu dem die Nachweismoleküle sichtbar gemacht werden, vor den Zeitpunkt gelegt, zu dem die Nachweismoleküle nach Kondensation oder Clustern zu Partikeln oder Teilchen aufgrund ihrer Größe aus dem Strom des Mediums herausgetragen werden. Das erfindungsgemäße Verfahren stellt einen transienten, zeitabhängigen Prozess dar, der die Diskrepanz zwischen der mit der Größe der Nachweismoleküle beziehungsweise der Teilchen zunehmenden visuelle Sichtbarkeit (skaliert ungefähr mit dem Durchmesser hoch 6) und dem mit der Größe abnehmenden Teilchenfolgevermögen (skaliert mit dem Durchmesser hoch -2) dadurch löst, dass die Nachweismoleküle und die sich daraus bildenden Teilchen (Zusammenballungen von Nachweismolekülen, kondensierte Nachweismoleküle) mittels Photomodifikation erst im Strom des Mediums in einer räumlichen und zeitlichen Nähe zur nachfolgenden optischen Messung erzeugt werden können. Dadurch wachsen die Zusammenballungen der Nachweismoleküle im umgebenden Strom des Mediums, so dass sie intrinsischer Teil der Mediumsströmung sind und nicht erst von außen eingebracht werden müssen.

In einer Ausführungsform umfasst die Erzeugungslichtquelle einen oder mehrere Laser, vorzugsweise UV-Laser, die auf einen oder mehrere gewünschte lokale Erzeugungsorte für die Nachweismoleküle im strömenden Medium gerichtet oder fokussiert sind. Die Wellenlänge des verwendeten Laserlichts muss so gewählt werden, dass das Laserlicht hinreichend energiereich ist, um die Bindung im Molekül zur Erzeugung des Nachweismoleküls zu modifizieren, anzuregen oder im Falle einer Photodissoziation aufbrechen zu können. Laser können sehr genau ausgerichtet und/oder fokussiert werden, um lediglich in einem lokal begrenzten Ort im zu untersuchenden Medium selbst die für die Erzeugung der Nachweismoleküle benötigte Energie zu deponieren. Dort werden dann pro Volumeneinheit wesentlich mehr Nachweismoleküle als intrinsischer Teil der Strömung erzeugt als an den Orten, die das Laserlicht bei einer geringeren Photonendichte passiert. Auch dort können zwar Nachweismoleküle erzeugt werden, allerdings treffen diese dort auf eine deutlich geringere Anzahl anderer Nachweismoleküle, so dass deren Anzahl pro Volumeneinheit zu gering ist, um selbst mittels Fluoreszenz nachgewiesen werden zu können (gegebenenfalls durch Hinzufügen eines Intensitätsfilters) beziehungsweise ein Zusammenballen der Nachweismoleküle aufgrund der geringen Anzahl pro Volumeneinheit nicht nennenswert stattfindet und diese Nachweismoleküle somit in der nachfolgenden optischen Messung nicht detektiert werden können. In Bereich des gerichteten oder fokussierten Laserstrahls werden dagegen aufgrund der dortigen hohen Photonendichte besonders viele Nachweismoleküle erzeugt, so dass es dort pro Volumeneinheit eine für den Nachweis ausreichend große Anzahl an Nachweismolekülen gibt, wodurch es gegebenenfalls auch zu einer deutlich verstärkten Zusammenballung der Nachweismoleküle kommen kann, wodurch diese dann in der nachfolgenden optischen Messung leicht erkannt werden können. Somit können die Strömungsverhältnisse über die geeignete Ausrichtung / Anordnung der Laserfokuspunkte lokal mit einer sehr guten Nachweisbarkeit der Nachweismoleküle genau gemessen werden. Hierbei kann der oder die Laser als Dauerstrich-Laser oder als gepulster Laser betrieben werden. Die Laser, die eine vorgegebene benötigte Photonenenergie (Wellenlänge) bereitstellen, sind bekannt, so dass der Fachmann einen geeigneten Laser auswählen kann.

In einer bevorzugten Ausführungsform wird die Erzeugungslichtquelle so gesteuert, dass der oder die Laser zeitlich intensitätsmoduliertes Licht, beispielsweise gepulstes Licht, abgeben. Im Falle von gepulstem Licht haben die Pulse vorzugsweise eine Pulslänge kleiner 1000ns, besonders bevorzugt kleiner 100nsn, noch mehr bevorzugt kleiner 10 ns. Über die Anpassung der Laserpulse lassen sich die Größen und/oder Anzahl der Cluster (Zusammenballungen der Nachweismoleküle) steuern. Längere Pulse lassen bei gleicher Energiedichte im Laserfokus bei gleicher Dichte des Mediums in der Regel größere Cluster entstehen als es bei kürzeren Pulsen der Fall wäre. Beispielsweise lassen sich bei Raumtemperatur UF₅-Nachweismoleküle als gut nachweisbarer Rauch aus UF₆-Molekül mittels eines gepulsten Nd:YAG-Lasers mit Wellenlänge 266nm und Pulsen < 10ns mit Energiegehalten von 12mJ erzeugen. Einzelne Partikel konnten sogar mehrere Minuten lang optisch beobachtet werden.

In einer weiteren Ausführungsform wird die optischen Messung von Strömungseigenschaften mittels Beleuchten der Nachweismoleküle im strömenden Medium an einem oder mehreren Nachweisorten und einer oder mehrere nachfolgende Aufnahmen der beleuchteten Nachweismoleküle an einem oder mehreren Nachweisorten durchgeführt. Die Beleuchtung kann je nach verwendetem optischem Messsystem einerseits zu einer Fluoreszenz der Nachweismoleküle oder im umgekehrten Fall zu einer Fluoreszenz aller Moleküle mit Ausnahme der Nachweismoleküle führen. Somit werden die Nachweismoleküle aufgrund der Fluoreszenz als Lichtemitter in einer nichtemittierenden Umgebung oder als Nicht-Emitter in einer emittierenden Umgebung detektiert und damit am Nachweisort zu einem Nachweiszeitpunkt nachgewiesen. Zu diesem Zweck muss die Beleuchtung mit einer zur Anregung der Fluoreszenz geeigneten Wellenlänge erfolgen. Diese Verfahren ist dafür unabhängig von etwaigen Clusterung der Nachweismoleküle im Strom des Mediums und der erreichten Teilchengrößen. Andererseits können die Nachweismoleküle anhand von Lichtstreuung oder Reflexion mit einer Beleuchtung mit einer beliebigen detektierbaren Wellenlänge nachgewiesen werden, sofern die Nachweismoleküle zu ausreichen großen Teilchen auf dem Weg zum Nachweisort kondensiert sind. Nachweismoleküle können auf Molekülbasis oder bei zu kleinen Teilchen dagegen nicht mittels Lichtreflexion oder Lichtstreuung nachgewiesen werden, da in diesen Fällen das reflektierte oder gestreute Licht eine zu geringe Intensität hat. Dieses Verfahren stellt gewisse Anforderungen an eine kontrollierbare Teilchenbildung, ist dafür aber unabhängig von einer bestimmten Wellenlänge und damit von einer dafür speziell auszuwählenden Lichtquelle.

In einer bevorzugten Ausführungsform wird der Nachweis der Nachweismoleküle am Nachweisort als Teil eines PIV-Verfahrens durchgeführt. PIV bezeichnet die sogenannte "Particle Image Velocimetry", die ein berührungsloses optisches Verfahren zur Bestimmung von Geschwindigkeitsfeldern in der Strömungsmechanik ist. Das klassische PIV-Verfahren fotografiert in kurzen zeitlichen Abständen sichtbare Partikel im strömenden Medium. Aus den unterschiedlichen Partikelpositionen auf den beiden Bildern kann die Bewegungsrichtung und Geschwindigkeit der Partikel und damit die des die Partikel mitnehmenden Mediums ermittelt werden. Das im erfindungsgemäßen Verfahren angewendete PIV-Verfahren kann beispielsweise lediglich mit einer einzigen Aufnahme der sichtbaren Partikel (oder Nachweismoleküle) am Nachweisort durchgeführt werden, da die Referenzposition zur Geschwindigkeitsbestimmung durch den vorab bekannten Erzeugungsort bestimmt ist, der wiederum durch den Betrieb der Erzeugungslichtquelle, insbesondere durch das Volumen und dem Zeitpunkt, in und an dem mittels Photomodifikation die Nachweismoleküle erzeugt werden, bestimmt ist. Diese Aufnahme stellt dann den optisch erfolgten Nachweis (optische Messung) der Nachweismoleküle am Nachweisort dar. Die Referenzposition (Entstehungsort der Nachweismoleküle) und die Entstehungszeit sind umso genauer apparativ festgelegt, je genauer das zur Photomodifikation verwendete Licht in einem eng begrenzten Volumen fokussiert ist und je kürzer die Belichtungspulse mit Licht der Erzeugungslichtquelle sind. Für jeden so erzeugten Lichtpuls wird nachfolgend ein weiteres Bild der strömenden Partikel aufgenommen (optische Messung am Nachweisort), das den Nachweisort der Partikel zum Aufnahmezeitpunkt dieses Bildes räumlich festlegt. Aus der räumlichen Differenz zwischen bekanntem Erzeugungsort und Nachweisort (Aufnahmeort des Bildes) ergibt sich die Wegstrecke, die die Partikel zwischen Entstehungszeit und Aufnahmezeit des Bildes am Nachweisort zurückgelegt haben, woraus sich Geschwindigkeit und Bewegungsrichtung der jeweiligen Partikel ergeben. Die Bestimmung der Vektorkomponenten der Strömung kann durch Kenntnis der Strahllage des Lichts der Erzeugungslichtquelle, beispielsweise der Strahllage des Laserpulses, erfolgen. In einer alternativen Ausführungsform kann das PIV-Verfahren auch mit mehreren Aufnahmen durchgeführt werden, wo die Nachweisorte der Nachweismolekülen zueinander korreliert werden und somit die Strömungseigenschaften des Mediums bestimmt werden. Das erfindungsgemäße Verfahren stellt somit ein deutlich vereinfachtes PIV-Verfahren unter Vermeidung der sonst notwendigen Doppelbelichtung beim klassischen PIV-Verfahren dar. Die Position, die von der Erzeugungslichtquelle belichtet wird, und die Aufnahmeposition des Bildes können dabei je nach Anwendung im Rahmen der anlagenspezifischen Rahmenbedingungen frei gewählt werden. Die Beleuchtungsquelle zur Beleuchtung des Nachweisortes kann jede dafür geeignete Beleuchtungsquelle sein, die Licht einer Wellenlänge emittiert, die von einem Detektionsmittel zur Aufnahme des Bildes detektiert werden kann. Die Nachweismoleküle werden dann mittels des von ihnen reflektierten oder gestreuten Lichts der Beleuchtungsquelle auf der Aufnahme durch das Detektionsmittel sichtbar.

In einer Ausführungsform sind der Erzeugungsort der Nachweismoleküle und der Nachweisort räumlich zueinander angepasst, dass sich die Nachweismoleküle zwischen dem Erzeugungsort und dem Nachweisort mit dem strömenden Medium zumindest mit gleicher Geschwindigkeitskomponente der zu untersuchenden Richtung mitbewegen. Der Begriff "gleich" ist hier nicht mathematisch zu verstehen, sondern bezeichnet Geschwindigkeiten oder Geschwindigkeitskomponenten als gleich, sofern diese nicht merklich voneinander abweichen. Als gleich werden hier im Rahmen der Messgenauigkeit des Verfahrens beispielsweise Geschwindigkeiten angesehen, die eine Differenz kleiner 5 - 10% besitzen. Durch diese kurzen Erzeugungspulse lässt sich das Strömungsverhalten auch sehr schnell strömende Medien mit der notwendigen Genauigkeit messen. Wird beispielsweise durch Laserbeschuss die Erzeugung der Nachweismoleküle unmittelbar in der Nähe des zu untersuchenden Volumenelements im strömenden Medium induziert, bilden sich die Nachweismoleküle (und die entsprechenden Cluster) direkt innerhalb der Strömung und haben anfänglich sogar ein unendlich großes Teilchenfolgevermögen, das bis zum Nachweisort nicht wesentlich nachlässt, sofern dieser hinreichend nahe am Erzeugungsort ist. Dies ist beispielsweise der Fall, falls der Erzeugungsort und Nachweisort so gewählt sind, dass bei vorliegender Strömungsgeschwindigkeit die Differenz zwischen Erzeugungszeitpunkt und Nachweiszeitpunkt beispielsweise unter 1s ist. So ist die Übertragbarkeit der Strömungsverhältnisse der Nachweismoleküle auf das umgebende Medium beliebig gut zu treffen. Für einen Nachweis mittels Fluoreszenz bei nicht zusammengeballten Nachweismolekülen ist diese Abhängigkeit weniger bedeutend. Hier muss lediglich darauf geachtet werden, dass sich die Strömungsverhältnisse im umgebenden Medium zwischen Erzeugungsort und Nachweisort nicht zu stark ändern, so dass die räumlichen und zeitlichen Korrelationen beziehungsweise Differenzen zwischen Erzeugungs- und Nachweisort sowie Erzeugungszeitpunkt und Nachweiszeitpunkt charakteristisch für die Strömungsgeschwindigkeit an Nachweisort sind.

In einer Ausführungsform sind der Erzeugungszeitpunkt und der Nachweiszeitpunkt der Nachweismoleküle so aufeinander abgestimmt, dass Teilchengröße und Teilchenfolgevermögen der Nachweismoleküle für optischen Messung von Strömungseigenschaften besonders geeignet sind. Die freie Wählbarkeit des Erzeugungsortes und des Nachweisortes im strömenden Medium im erfindungsgemäßen Verfahren ermöglicht eine Anpassung des erfindungsgemäßen Verfahrens auf Arten des Mediums, Druckverhältnisse und Geschwindigkeiten bei gleich guter Nachweisgenauigkeit (gleich gute Teilchenfolgeeigenschaften). Für einen Nachweis mittels Fluoreszenz bei nicht zusammengeballten Nachweismolekülen ist diese Abhängigkeit weniger bedeutend. Hier muss lediglich darauf geachtet werden, dass sich die Strömungsverhältnisse im umgebenden Medium zwischen Erzeugungszeitpunkt und Nachweiszeitpunkt nicht zu stark ändern, so dass die räumlichen und zeitlichen Korrelationen zwischen Erzeugungs- und Nachweisort sowie Erzeugungszeitpunkt und Nachweiszeitpunkt charakteristisch für die Strömungsgeschwindigkeit an Nachweisort sind.

In einer Ausführungsform wird das Beleuchten der Nachweismoleküle durch eine stroboskopische Beleuchtungsquelle durchgeführt. Eine stroboskopische Beleuchtungsquelle schließt beispielsweise auch einen gepulsten Laser mit ein. Durch die zeitliche Abstimmung des Lichtes der Erzeugungslichtquelle (zeitlich definierter Lichtpuls) und des Aufnahmezeitpunktes des Bildes am Nachweisort mittels stroboskopischer Beleuchtung (Beleuchtungsquelle ist hier eine Stroboskoplampe oder ein geeignet Intensitätsmodulierter, z.B. gepulster Laser) zur Aufnahme des Bildes kann der negative Einfluss des Anwachsens der Teilchengröße auf das Teilchenfolgevermögen mit dem positiven Einfluss auf die Detektionseffizienz bei dem optischen Messung (Sichtbarkeit auf dem aufgenommenen Bild) optimiert werden. Hierbei wird das Zeitverhalten des Teilchenfolgevermögens und der Streueffizienz (Streuung des Lichts bei der Aufnahme des Bildes am Nachweisort) als Funktion der Partikelgröße der Zusammenballungen aus Nachweismolekülen zur Optimierung der Detektionswahrscheinlichkeit verwendet.

In einer Ausführungsform ist die Photomodifikation ein reversibler Umwandlungsprozess im strömenden Medium, wobei das Nachweismolekül zumindest bis zum Nachweiszeitpunkt ausreichend stabil ist. Diese hinreichend lange aber dennoch limitierte Stabilität sichert zum einen (a) einen zuverlässigen optischen Nachweis der Nachweismoleküle und zum anderen (b) kann eine Verschmutzung der medium-leitenden Anlage oder des Mediums selber verhindert werden. Die Reversibilität des Umwandlungsprozess führt dazu, dass sich aus den Nachweismolekülen erneut wieder das ursprüngliche Molekül bildet. Dieser Vorgang kann von selber ablaufen, indem das umgebende Medium alle benötigten Bestandteile weiterhin umfasst oder kann durch geeignete Zusatzmaßnahmen indiziert werden. Beispielsweise kann im Falle der Hinreaktion UF₆ -> UF₅ + ½ F₂ als Additiv zur Rückreaktion F₂ oder ClF₃ eingesetzt werden.

In einer bevorzugten Ausführungsform wird das Nachweismolekül nach erfolgtem Nachweis durch Zugabe geeigneter Additive wieder in das Molekül zurück umgewandelt, aus dem das Nachweismolekül durch die Photomodifikation erzeugt wurde. Diese Zugabe von Extern kann beispielsweise die Rückbildung der Nachweismoleküle in die ursprünglichen Moleküle zeitlich stark beschleunigen, so dass eine eventuelle Verschmutzung der Anlage oder des Mediums noch effektiver verhindert werden kann. In einer bevorzugten Ausführungsform werden dazu die Additive zu einem geeigneten Zeitpunkt und an einer geeigneten Position zugegeben, bevor sich die Nachweismoleküle an Teilen einer Anlage für die Leitung des strömenden Mediums niederschlagen können.

Die Erfindung betrifft des Weiteren ein System zur Ausführung des erfindungsgemäßen Verfahrens zur berührungslosen optischen Messung von Strömungseigenschaften eines strömenden Mediums, beispielsweise ein Gas oder ein Fluid, aus Molekülen einer Molekülart oder aus einem Gemischen aus unterschiedlichen Molekülarten umfassend eine Anlage zur Führung des strömenden Mediums entlang einer gewünschten Richtung, eine an einer ersten nicht störenden Position im Strom des Mediums befindlich angeordnete Erzeugungslichtquelle zum berührungslosen Erzeugen von Nachweismolekülen durch Umwandlung zumindest eines ausreichenden Anteils der Moleküle mindestens einer Molekülart in Nachweismoleküle einer davon unterschiedlichen Molekülart mittels Photomodifikation, vorzugsweise durch Photodissoziation, in dem strömenden Medium an einem Erzeugungsort zu einem Erzeugungszeitpunkt, ein an einer zweiten Position angeordnetes optisches Messsystem zum berührungslosen Nachweisen der zuvor erzeugten Nachweismoleküle als Bestandteil des strömenden Mediums an einem Nachweisort zu einem Nachweiszeitpunkt, und einer mit der Erzeugungslichtquelle und dem optischen Messsystem geeignet verbundenen Analyseeinheit zum Bestimmen der Strömungseigenschaften des strömenden Mediums aus den räumlichen und zeitlichen Korrelationen zwischen Erzeugungsort und Nachweisort und zwischen Erzeugungszeitpunkt und Nachweiszeitpunkt der Nachweismoleküle im strömenden Medium. Eine einfache Korrelation ist beispielsweise die Differenz. Damit die Erzeugungslichtquelle den Strom des Mediums nicht stört, kann sie sich an einem Ort im Medium befinden, von dem sie keinen messbaren Einfluss auf die Strömungseigenschaften am Erzeugungs- und Nachweisorten besitzt (beispielweise eine weit vom Erzeugungs- und Nachweisort entfernte Position der Erzeugungslichtquelle) oder die Erzeugungslichtquelle kann außerhalb des strömenden Medium angeordnet sein. Das erfindungsgemäße System ermöglicht die Ausführung des erfindungsgemäßen Verfahrens unter Erzielung der voranstehend beschriebenen Vorteile. In diesem System sind zumindest die Erzeugungslichtquelle, das optisches Messsystem (beispielsweise umfassend eine Beleuchtungsquelle und ein Detektionsmittel zur Ausführung des laserinduzierten Fluoreszenzverfahrens, eines PIV-Verfahrens oder eines MIV-Verfahrens) und die Analyseeinheit durch geeignete Datenverbindungen so miteinander verbunden, dass das System das erfindungsgemäße Verfahren durchführen kann. Die Details der Verbindungen können vom Fachmann geeignet gewählt werden. Beispielsweise werden die einzelnen Komponenten des erfindungsgemäßen Systems von einer mit den Komponenten verbundenen Kontrolleinheit aus gesteuert. Diese Kontrolleinheit kann auch Teil der Analyseeinheit sein. Die Anlage zur Führung des Mediums ist weit zu verstehen und beschränkt sich nicht auf gewöhnliche statische Rohrsysteme. Das Medium kann auch durch bewegte Führungen, beispielsweise rotierende Führungen geleitet werden. Bei einer außerhalb des strömenden Mediums angeordnete Erzeugungslichtquelle kann die Anlage zur Führung des Stroms des Mediums beispielsweise zumindest an der ersten und zweiten Position transparent für das Licht der Erzeugungslichtquelle und für die Komponenten des optischen Messsystems sein. Im Beispiel einer Rohrleitung für das strömende Medium können an der ersten und zweiten Position Fenster in der Rohrwand angeordnet sein oder die Rohrwand aus einem transparenten Material sein, damit die Erzeugungslichtquelle nicht im Strom des Mediums angeordnet sein braucht. In einer anderen Ausführungsform könnte die Lichtquelle in der Rohrwand selber angeordnet sein, so dass die Rohrwand kein Fenster umfassen muss und die Erzeugungslichtquelle dennoch nicht im Strom des Mediums angeordnet ist. In einer weiteren Ausführungsform könnte die Lichtquelle im Inneren des Rohres angeordnet sein, sofern ein hinreichend großer Abstand zum Erzeugungs- und Nachweisort sicherstellt, dass die Strömung dort dadurch nicht beeinflusst wird. Gleiches gilt für mögliche Beleuchtungsquelle und Detektionsmittel eines optischen Messsystems.

In einer Ausführungsform des Systems umfasst die Erzeugungslichtquelle einen oder mehrere Laser, vorzugsweise UV-Laser, die so ausgestaltet sind, dass sie auf einen oder mehrere gewünschte lokale Erzeugungsorte für die Nachweismoleküle im strömenden Medium gerichtet oder fokussiert sind, und das optische Messsystem ist dazu ausgestaltet, die Nachweismoleküle am Nachweisort mittels einer geeigneten Beleuchtungsquelle im strömenden Medium zu beleuchten und ein Detektionsmittel zur Aufnahme der am Nachweisort beleuchteten Nachweismoleküle umfasst. Die Beleuchtungsquelle kann jede dafür geeignete Lichtquelle sein. Die Beleuchtungsquelle muss bei Fluoreszenzverfahren die Wellenlänge ausstrahlen, die die gewünschte Fluoreszenz anregt. Beim Nachweis von Teilchen mittels reflektiertem oder gestreutem Licht kann die Beleuchtungsquelle dabei Licht jeder vom Detektionsmittel detektierbaren Wellenlänge ausstrahlen, bevorzugt ist allerdings Licht einer Wellenlänge, bei der die Reflektion oder Streuung besonders ausgeprägt ist. Bei beiden Fällen braucht die Beleuchtungsquelle nicht besonders fokussiert zu sein. Vorzugsweise leuchtet die Lichtquelle die Ebene des Nachweisortes vollständig aus, so dass die Nachweismoleküle in dieser Ebene unabhängig vom Ort in dieser Ebene optisch erkannt werden können. Detektionsmittel können beispielsweise CCD-basierte Kameras sein. Diese Kameras umfassen Sensoren (CCD-Chips) aus einer zweidimensionalen Matrix aus lichtempfindlichen Sensoren und eignen sich daher gut, zweidimensionale

Bilder wie hier die flächige Aufnahme des Nachweisortes aufzunehmen. Diese

Aufnahmen können in sehr kurzer Zeiten aufgenommen werden, beispielsweise in Millisekunden bis Mikrosekunden. Solche Sensoren sind je nach Anwendung und Ausgestaltung für sichtbare Wellenlängen als auch für Nah-Infrarotstrahlung- und UV-Strahlung einsetzbar. Je nach Art des optischen Messverfahrens (Fluoreszenzanregung, Lichtstreuung, etc.) kann der Fachmann den für die jeweiligen für die Emission, Streuung oder Reflektion des Lichts von den Nachweismolekülen zu erwartenden Wellenlängen geeigneten Sensortyp wählen.

In einer Ausführungsform sind die ersten und zweiten Positionen so gewählt und die Erzeugungslichtquelle und die Beleuchtungsquelle so ausgestaltet und ausgerichtet, dass sich die Nachweismoleküle zwischen dem Erzeugungsort und dem Nachweisort mit dem strömenden Medium mit gleicher Geschwindigkeit mitbewegen und Teilchengröße und Teilchenfolgevermögen der Nachweismoleküle für das Bestimmen der Strömungseigenschaften des strömenden Mediums besonders geeignet sind.

In einer Ausführungsform umfasst die Anlage zur Führung des strömenden Mediums mindestens ein Einlassmittel zur Zugabe geeigneter Additive in das strömende Medium, durch die das Nachweismoleküle wieder in das Molekül zurück umgewandelt werden können, aus dem das Nachweismolekül durch die Photomodifikation erzeugt wurde, vorzugsweise ist das Einlassmittel an einer Position angeordnet, die geeignet ist, diese Zurückumwandlung nach dem Nachweiszeitpunkt aber vor einem Niederschlagen der Nachweismoleküle an Teilen der Anlage für die Leitung des strömenden Mediums zu ermöglichen. Ein geeignetes Einlassmittel ist beispielsweise ein steuerbares Ventil, an das ein Reservoir umfassend die benötigten Additiven angeschlossen ist. Vorzugsweise steht das Reservoir unter einem geeigneten Druck, um die Additive nach Ansteuerung des Ventils in den Strom des Mediums abzugeben. Das steuerbare Ventil ist vorzugsweise mit dem System zur Ausführung des erfindungsgemäßen Verfahrens auf geeignete Weise verbunden.

### Kurze Beschreibung der Abbildungen

Diese und andere Aspekte der Erfindung werden im Detail in den Abbildungen wie folgt gezeigt:
- Fig.1:: schematische Darstellung des erfindungsgemäßen Systems zur berührungslosen optischen Messung von Strömungseigenschaften eines strömenden Mediums;
- Fig.2:: eine Ausführungsform des erfindungsgemäßen Verfahrens zur berührungslosen optischen Messung von Strömungseigenschaften eines strömenden Mediums;
- Fig.3:: eine weitere Ausführungsform des erfindungsgemäßen Verfahrens;
- Fig.4:: eine weitere Ausführungsform des erfindungsgemäßen Verfahrens.

### Detaillierte Beschreibung der Ausführungsbeispiele

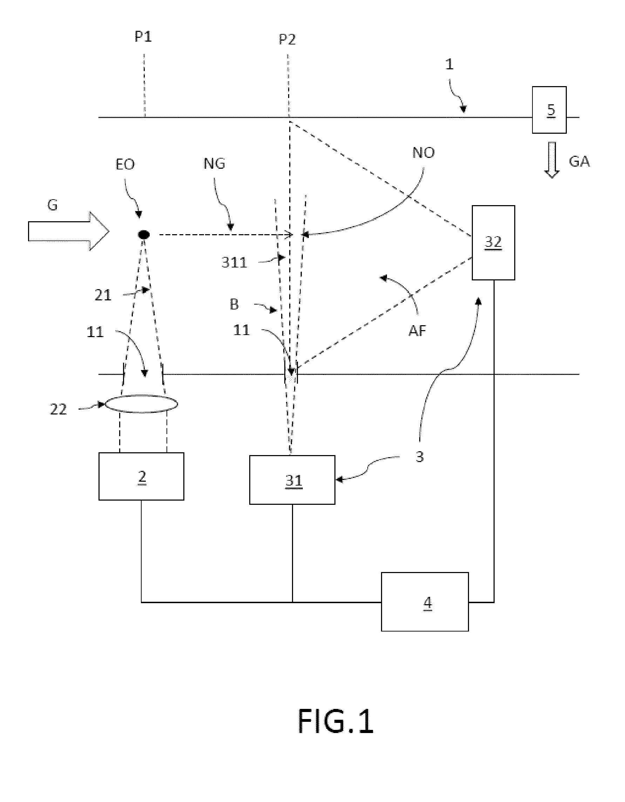

Fig.1 zeigt eine schematische Darstellung des erfindungsgemäßen Systems zur berührungslosen optischen Messung von Strömungseigenschaften eines strömenden Mediums aus Molekülen G, wobei die Strömungsrichtung durch den Pfeil mit Bezugszeichen "G" dargestellt ist. Das strömende Medium wird dabei in einer Anlage 1 entlang der gewünschten Richtung geführt. Die Anlage kann dabei alle technischen Maßnahmen bezeichnen, innerhalb denen ein Medium in eine beliebige Richtung strömt. Beispielsweise kann die Anlage 1 ein statisches oder dynamisches Rohrsystem oder eine Rohrleitung sein, wie hier angedeutet. An einer ersten Position P1 ist in dieser Ausführungsform eine Erzeugungslichtquelle 2 außerhalb der Rohrleitung und damit nicht im Strom des Mediums angeordnet. Das von der Erzeugungslichtquelle 2 ausgesendete Licht 21 (gestrichelt dargestellt) wird über eine Linse 22 durch ein Fenster 11 in der Rohrleitung 1 hindurch auf einen Erzeugungsort EO im Strom des Mediums fokussiert, um dort Nachweismoleküle NG durch Umwandlung zumindest eines ausreichenden Anteils der Moleküle G mindestens einer Molekülart in Nachweismoleküle NG einer davon unterschiedlichen Molekülart berührungslos mittels Photomodifikation in dem strömenden Medium an einem Erzeugungsort EO zu einem Erzeugungszeitpunkt ET zu erzeugen EZ. Linse 22 und/oder Erzeugungslichtquelle 2 können geeignet steuerbar oder schwenkbar angeordnet sein, um gegebenenfalls die Position des Erzeugungsortes EO im strömenden Medium variieren zu können. In einer anderen Ausführungsform kann das Licht 21 als Strahl auch nicht-fokussiert in das Medium geleitet werden, um die Nachweismoleküle im Medium zu erzeugen, sofern die Strahleigenschaften so beschaffen sind, dass der Erzeugungsort EO hinreichend bestimmt ist. Diese Erzeugung EZ (Photomodifikation) der Nachweismoleküle NG kann durch Aufspalten eines Moleküls (Photodissoziation) oder durch Erzeugen anderer Moleküle als Nachweismolekül NG als Verbindung von angeregten oder veränderten Molekülen ablaufen. Die Erzeugungslichtquelle 2 kann dafür ein oder mehrere Laser, vorzugsweise UV-Laser, umfassen, die so ausgestaltet sind, dass sie auf einen (wie hier dargestellt) oder mehrere gewünschte lokale Erzeugungsorte EO für die Nachweismoleküle NG im strömenden Medium gerichtet oder fokussiert sind. An einer zweiten Position P2 ist das optische Messsystem 3 zum berührungslosen Nachweisen N der zuvor am Erzeugungsort EO erzeugten Nachweismoleküle NG als Bestandteil des strömenden Mediums an einem Nachweisort NO zu einem Nachweiszeitpunkt NT angeordnet. Das optische Messsystem 3 umfasst in dieser Ausführungsform eine geeignete Beleuchtungsquelle 31, um die Nachweismoleküle NG im strömenden Medium zu beleuchten B. In dieser Ausführungsform wird das von der Beleuchtungsquelle 31 emittierte Licht 311 (gestrichelt dargestellt) durch ein Fenster 12 in der Rohrleitung 1 hindurch auf einen Nachweisort NO ausgesendet. Das Licht 311 ist hier soweit aufgefächert, um den Nachweisort als Fläche senkrecht, parallel oder schräg zum Mediumstrom auszuleuchten, um die Nachweismoleküle NG in einer Ebene und damit mit einer definierten Entfernung zum Erzeugungsort EO zu beleuchten B. Für die Streuung oder Reflektion des Lichts 311 an den Nachweismolekülen NG werden beispielsweise grüne Laser als Beleuchtungsquelle 31 verwendet. Des Weiteren umfasst das optische Messsystem 3 ein Detektionsmittel 32 zur Aufnahme AF der am Nachweisort NO beleuchteten Nachweismoleküle NG. Die Aufnahme kann beispielsweis mittels einer CCD-basierten Kamera als Detektionsmittel 32 vorgenommen werden. Hierbei sind die ersten und zweiten Positionen P1, P2 räumlich zueinander so gewählt und die Erzeugungslichtquelle 2 und die Beleuchtungsquelle 31 so ausgestaltet und ausgerichtet, dass sich die Nachweismoleküle NG zwischen dem Erzeugungsort EO und dem Nachweisort NO mit dem strömenden Medium mit gleicher Geschwindigkeit mitbewegen und Teilchengröße und Teilchenfolgevermögen TFV der Nachweismoleküle (NG) für das Bestimmen BS der Strömungseigenschaften des strömenden Mediums besonders geeignet sind. Die Beleuchtungsquelle 31 kann dabei geeignet steuerbar oder schwenkbar angeordnet sein, um die Position des Nachweisortes NO gegebenenfalls variieren zu können. Des Weiteren sind Erzeugungslichtquelle und optisches Messsystem mit einer Analyseeinheit 4 zum Bestimmen BS der Strömungseigenschaften des strömenden Mediums aus den räumlichen und zeitlichen Differenzen zwischen Erzeugungsort EO und Nachweisort NO und zwischen Erzeugungszeitpunkt ET und Nachweiszeitpunkt NT der Nachweismoleküle NG im strömenden Medium in dieser Ausführungsform mittels geeigneter Datenleitungen verbunden. Die Analyseeinheit 4 kann dazu einen geeigneten Prozessor umfassen, der die dafür benötigten Rechenprogramme ausführt. Die Analyseeinheit 4 kann des Weiteren eine Speichereinheit zur Speicherung der Strömungsdaten umfassen oder ist dazu ausgestaltet, die Daten an eine Speicher- oder Ausgabeeinheit zu übermitteln (hier nicht explizit gezeigt). In dieser Ausführungsform umfasst die Anlage 1 des Weiteren ein Einlassmittel 5 zur Zugabe geeigneter Additive GA (durch Pfeil dargestellt) in das strömende Medium, durch die die Nachweismoleküle NG wieder in die Moleküle G zurück umgewandelt werden können, aus denen die Nachweismoleküle NG durch die Photomodifikation erzeugt wurden. Hierbei ist das Einlassmittel 5 an einer Position im Strom des Mediums kurz hinter dem Nachweisort NO angeordnet, damit die Zurückumwandlung vor einem Niederschlagen der Nachweismoleküle NG an den Rohrwandungen der Anlage 1 passiert.

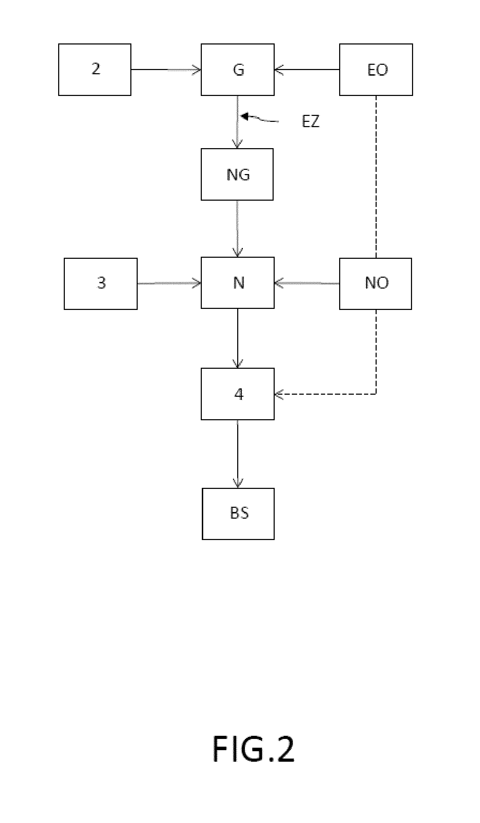

Fig.2 zeigt eine Ausführungsform des erfindungsgemäßen Verfahrens zur berührungslosen optischen Messung von Strömungseigenschaften eines strömenden Mediums aus Molekülen G einer Molekülart oder aus einem Gemischen G aus unterschiedlichen Molekülarten. Hierbei werden Nachweismolekülen NG durch Umwandlung zumindest eines ausreichenden Anteils der Moleküle G mindestens einer Molekülart mittels Photomodifikation in dem strömenden Medium durch eine sich nicht im Strom des Mediums befindliche Erzeugungslichtquelle 2 in Nachweismoleküle NG einer davon unterschiedlichen Molekülart an einem Erzeugungsort EO zu einem Erzeugungszeitpunkt ET erzeugt EZ. In einer alternativen Ausführungsform kann die Erzeugungslichtquelle 2 auch im Medium an einem nicht störenden Ort angeordnet sein, der keinen Einfluss auf die Strömungseigenschaften des Mediums zwischen Erzeugungsort EO und Nachweisort NO hat. Nachfolgend werden die zuvor erzeugten Nachweismoleküle NG als Bestandteil des strömenden Mediums durch ein optisches Messsystem 3 an einem Nachweisort NO zu einem Nachweiszeitpunkt NT berührungslos nachgewiesen N und die Strömungseigenschaften des strömenden Mediums aus den räumlichen und zeitlichen Korrelationen zwischen Erzeugungsort EO und Nachweisort NO und zwischen Erzeugungszeitpunkt ET und Nachweiszeitpunkt NT der Nachweismoleküle NG im strömenden Medium mittels einer Analyseeinheit 4 bestimmt BS.

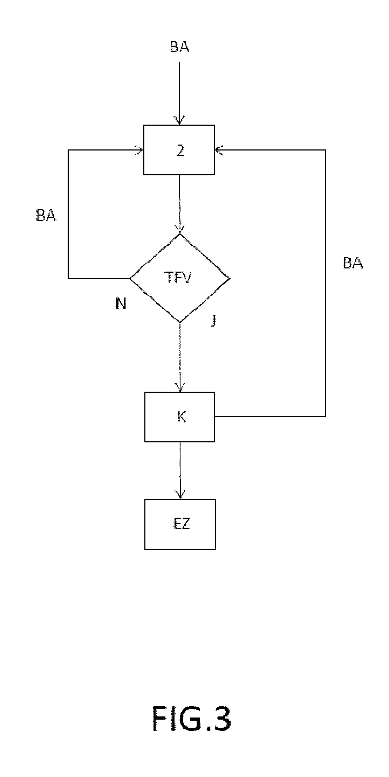

Fig.3 zeigt eine weitere Ausführungsform des erfindungsgemäßen Verfahrens, wobei die Betriebseigenschaften der Erzeugungslichtquelle 2 wie beispielsweise Intensität, Fokussierung, Energie etc. so angepasst BA werden, dass die erzeugten Nachweismoleküle NG zumindest bis zum Nachweiszeitpunkt NT ein Teilchenfolgevermögen TFV haben (Fall "J"), das die Nachweismoleküle NG im Wesentlichen mit den gleichen Strömungseigenschaften wie das strömende Medium im strömenden Medium mitströmen lässt. Sofern dieses Teilchenfolgevermögen TFV nicht erreicht ist (Fall "N"), wird die Betriebseigenschaften der Erzeugungslichtquelle 2 weiter angepasst BA. Die Anpassung der Betriebseigenschaften BA wird auch dafür den Fall durchgeführt, in dem die erzeugten Nachweismoleküle NG zu Teilchen oder Partikeln kondensieren K, damit deren Größen zumindest bis zum Nachweiszeitpunkt NT eine Schwellengröße nicht überschreiten, ab der die kondensierten K Teilchen oder Partikel ihr Teilchenfolgevermögen verlieren, beispielsweise im strömenden Medium absinken. Dazu kann die Erzeugungslichtquelle 2 ein oder mehrere Laser, vorzugsweise UV-Laser, umfassen, die auf einen oder mehrere gewünschte lokale Erzeugungsorte EO für die Nachweismoleküle NG im strömenden Medium gerichtet oder fokussiert sind. Ferner kann die Erzeugungslichtquelle 2 so gesteuert werden, dass der oder die Laser gepulstes Licht abgeben, wobei die Pulse eine Pulslänge kleiner 1000ns, besonders bevorzugt kleiner 100ns, noch mehr bevorzugt kleiner 10ns besitzen.

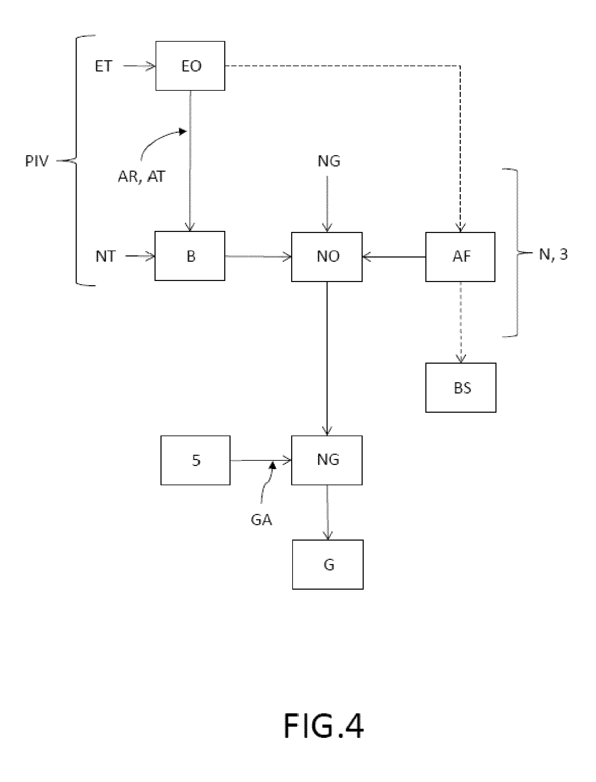

Fig.4 zeigt eine weitere Ausführungsform des erfindungsgemäßen Verfahrens, wobei die optischen Messung von Strömungseigenschaften mittels Beleuchten B der Nachweismoleküle NG im strömenden Medium am Nachweisort NO und einer nachfolgenden Aufnahme AF der beleuchteten Nachweismoleküle NG am Nachweisort NO durchführt wird. Hierbei sind der Erzeugungsort EO der Nachweismoleküle NG und der Nachweisort NO räumlich zueinander so angepasst AR, dass sich die Nachweismoleküle NG zwischen dem Erzeugungsort EO und dem Nachweisort NO mit dem strömenden Medium mit gleicher Geschwindigkeit mitbewegen. Gleichermaßen sind in dieser Ausführungsform der Erzeugungszeitpunkt ET und der Nachweiszeitpunkt NT der Nachweismoleküle NG so aufeinander abgestimmt AT, dass Teilchengröße und Teilchenfolgevermögen der Nachweismoleküle NG für optischen Messung von Strömungseigenschaften besonders geeignet sind. Die Bestimmung der Strömungseigenschaften des strömenden Medium wird in dieser Ausführungsform als PIV-Verfahrens PIV durchgeführt, wobei die sonst übliche Doppelbelichtung des gewöhnlichen PIV-Verfahrens durch die Kenntnis von Erzeugungsort EO und Erzeugungszeitpunkt ET entfallen kann und eine einfache Aufnahme AF am Nachweisort NO für die Bestimmung BS ausreicht.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

### Liste der Bezugszeichen

- 1: Anlage zur Führung des zu untersuchenden Mediums
- 11: Fenster in der Anlage zum Transmittieren des Lichts der Erzeugungslichtquelle
- 12: Fenster in der Anlage zum Transmittieren des Lichts der Beleuchtungsquelle
- 2: Erzeugungslichtquelle
- 21: Licht der Erzeugungslichtquelle
- 22: Linse zum Fokussieren des Lichts der Erzeugungslichtquelle
- 3: optisches Messsystem
- 31: Beleuchtungsquelle
- 311: Licht der Beleuchtungslichtquelle
- 32: Detektionsmittel
- 4: Analyseeinheit
- 5: Einlassmittel

- AF: Aufnahme der beleuchteten Nachweismoleküle
- AR: räumliche Anpassung von Erzeugungsort zu Nachweisort
- AT: zeitliche Anpassung von Erzeugungszeitpunkt zu Nachweiszeitpunkt
- B: Beleuchten der Nachweismoleküle
- BA: Anpassen Betriebseigenschaften der Dissoziationslichtquelle
- BS: Bestimmen der Strömungseigenschaften
- EO: Erzeugungsort des Nachweismoleküle
- EZ: berührungsloses Erzeugen von Nachweismolekülen
- ET: Zeitpunkt der Erzeugung der Nachweismoleküle (Erzeugungszeitpunkt)
- G: Moleküle, Gemisch (ursprünglich)
- GA: Additive
- K: Kondensieren oder Clustern der Nachweismoleküle zu Teilchen oder Partikeln
- N: berührungsloses Nachweisen der Nachweismoleküle am Nachweisort (Nachweis)
- NG: Nachweismoleküle
- NO: Nachweisort der Nachweismoleküle
- NT: Zeitpunkt des Nachweises der Nachweismoleküle (Nachweiszeitpunkt)
- P1: erste Position
- P2: zweite Position
- PIV: PIV-Messverfahren
- TFV: Teilchenfolgevermögen

## Patentansprüche

1. Ein Verfahren zur berührungslosen optischen Messung von Strömungseigenschaften eines strömenden Mediums, vorzugsweise ein Gas oder ein Fluid, aus Molekülen (G) einer Molekülart oder aus einem Gemisch (G) aus unterschiedlichen Molekülarten umfassend die Schritte
- berührungsloses Erzeugen (EZ) von Nachweismolekülen (NG) durch Umwandlung zumindest eines ausreichenden Anteils der Moleküle (G) mindestens einer Molekülart mittels Photomodifikation, vorzugsweise durch Photodissoziation, in dem strömenden Medium durch eine nicht den Strom störende, vorzugsweise sich nicht im Strom befindliche, Erzeugungslichtquelle (2) in Nachweismoleküle (NG) einer davon unterschiedlichen Molekülart an einem Erzeugungsort (EO) zu einem Erzeugungszeitpunkt (ET),
- berührungsloses Nachweisen (N) der zuvor erzeugten Nachweismoleküle (NG) als Bestandteil des strömenden Mediums durch ein optisches Messsystem (3) an einem Nachweisort (NO) zu einem Nachweiszeitpunkt (NT), und
- Bestimmen (BS) der Strömungseigenschaften des strömenden Mediums aus den räumlichen und zeitlichen Korrelation zwischen Erzeugungsort (EO) und Nachweisort (NO) und zwischen Erzeugungszeitpunkt (ET) und Nachweiszeitpunkt (NT) der Nachweismoleküle (NG) im strömenden Medium.

2. Das Verfahren nach Anspruch 1,
**dadurch gekennzeichnet,**
**dass** die Betriebseigenschaften der Erzeugungslichtquelle (2) so angepasst (BA) werden, dass die erzeugten Nachweismoleküle (NG) zumindest bis zum Nachweiszeitpunkt (NT) ein Teilchenfolgevermögen (TFV) haben, das die Nachweismoleküle (NG) im Wesentlichen mit dem gleichen Strömungsverhalten wie das strömende Medium im strömenden Medium mitströmen lässt.

3. Das Verfahren nach Anspruch 2,
**dadurch gekennzeichnet,**
**dass** die Betriebseigenschaften der Erzeugungslichtquelle (2) so angepasst (BA) werden, dass die erzeugten Nachweismoleküle (NG) zu Teilchen oder Partikeln kondensieren oder Clustern (K), deren Größen zumindest bis zum Nachweiszeitpunkt (NT) eine Schwellengröße nicht überschreiten, ab der die kondensierten (K) Teilchen oder Partikel im strömenden Medium das Teilchenfolgevermögen (TFV) verlieren.

4. Das Verfahren nach einem der voranstehenden Ansprüche,
**dadurch gekennzeichnet,**
**dass** die Erzeugungslichtquelle (2) einen oder mehrere Laser, vorzugsweise UV-Laser, umfasst, die auf einen oder mehrere gewünschte lokale Erzeugungsorte (EO) für die Nachweismoleküle (NG) im strömenden Medium gerichtet oder fokussiert sind.

5. Das Verfahren nach Anspruch 4,
**dadurch gekennzeichnet,**
**dass** die Erzeugungslichtquelle (2) so gesteuert wird, dass der oder die Laser zeitlich intensitätsmoduliertes Licht abgeben, vorzugsweise gepulstes Licht mit einer Pulslänge kleiner 1000ns, besonders bevorzugt kleiner 100ns, noch mehr bevorzugt kleiner 10ns.

6. Das Verfahren nach einem der voranstehenden Ansprüche,
**dadurch gekennzeichnet,**
**dass** die optischen Messung von Strömungseigenschaften mittels Beleuchten (B) der Nachweismoleküle (NG) im strömenden Medium an einem oder mehreren Nachweisort (NO) und einer oder mehrere nachfolgende Aufnahme (AF) der beleuchteten Nachweismoleküle (NG) an einem oder mehreren Nachweisorten (NO) durchführt wird, vorzugsweise als Teil eines PIV-Verfahrens (PIV).

7. Das Verfahren nach Anspruch 6,
**dadurch gekennzeichnet,**
**dass** der Erzeugungsort (EO) der Nachweismoleküle (NG) und der Nachweisort (NO) räumlich zueinander angepasst (AR) sind, dass sich die Nachweismoleküle (NG) zwischen dem Erzeugungsort (EO) und dem Nachweisort (NO) mit dem strömenden Medium zumindest mit gleicher Geschwindigkeitskomponente der zu untersuchenden Richtung mitbewegen.

8. Das Verfahren nach einem der Ansprüche 6 oder 7,
**dadurch gekennzeichnet,**
**dass** der Erzeugungszeitpunkt (ET) und der Nachweiszeitpunkt (NT) der Nachweismoleküle (NG) so aufeinander abgestimmt (AT) sind, dass Teilchengröße und Teilchenfolgevermögen der Nachweismoleküle (NG) für optischen Messung von Strömungseigenschaften besonders geeignet sind.

9. Das Verfahren nach einem der Ansprüche 6 bis 8,
**dadurch gekennzeichnet,**
**dass** das Beleuchten (B) der Nachweismoleküle (NG) durch eine stroboskopische Beleuchtungsquelle (31) durchgeführt wird.

10. Das Verfahren nach einem der voranstehenden Ansprüche,
**dadurch gekennzeichnet,**
**dass** die Photomodifikation ein reversibler Umwandlungsprozess im strömenden Medium ist, wobei das Nachweismolekül (NG) zumindest bis zum Nachweiszeitpunkt (NT) ausreichend stabil ist.

11. Das Verfahren nach Anspruch 10,
**dadurch gekennzeichnet,**
**dass** das Nachweismolekül (NG) nach erfolgtem Nachweis (N) durch Zugabe geeigneter Additive (GA) wieder in das Molekül (G) zurück umgewandelt wird, aus dem das Nachweismolekül (NG) durch die Photomodifikation erzeugt wurde.

12. Das Verfahren nach Anspruch 11,
**dadurch gekennzeichnet,**
**dass** die Additive (GA) zu einem geeigneten Zeitpunkt und an einer geeigneten Position zugegeben werden, bevor sich die Nachweismoleküle (NG) an Teilen einer Anlage (1) für die Leitung des strömenden Mediums niederschlagen können.

13. Ein System zur Ausführung des Verfahrens nach Anspruch 1 zur berührungslosen optischen Messung von Strömungseigenschaften eines strömenden Mediums aus Molekülen (G) einer Molekülart oder aus einem Gemischen (G) aus unterschiedlichen Molekülarten umfassend eine Anlage (1) zur Führung des strömenden Mediums (G) entlang einer gewünschten Richtung, eine an einer ersten nicht störenden Position (P1) befindlich angeordnete Erzeugungslichtquelle (2) zum berührungslosen Erzeugen (EZ) von Nachweismolekülen (NG) durch Umwandlung zumindest eines ausreichenden Anteils der Moleküle (G) mindestens einer Molekülart in Nachweismoleküle (NG) einer davon unterschiedlichen Molekülart mittels Photomodifikation, vorzugsweise durch Photodissoziation, in dem strömenden Medium an einem Erzeugungsort (EO) zu einem Erzeugungszeitpunkt (ET), ein an einer zweiten Position (P2) angeordnetes optisches Messsystem (3) zum berührungslosen Nachweisen (N) der zuvor erzeugten Nachweismoleküle (NG) als Bestandteil des strömenden Mediums an einem Nachweisort (NO) zu einem Nachweiszeitpunkt (NT), und einer mit der Erzeugungslichtquelle und dem optischen Messsystem geeignet verbundenen Analyseeinheit (4) zum Bestimmen (BS) der Strömungseigenschaften des strömenden Mediums aus den räumlichen und zeitlichen Korrelationen zwischen Erzeugungsort (EO) und Nachweisort (NO) und zwischen Erzeugungszeitpunkt (ET) und Nachweiszeitpunkt (NT) der Nachweismoleküle (NG) im strömenden Medium.

14. Das System nach Anspruch 13,
**dadurch gekennzeichnet,**
**dass** die Erzeugungslichtquelle (2) einen oder mehrere Laser, vorzugsweise UV-Laser, umfasst, die so ausgestaltet sind, dass sie auf einen oder mehrere gewünschte lokale Erzeugungsorte (EO) für die Nachweismoleküle (NG) im strömenden Medium gerichtet oder fokussiert sind, und dass das optische Messsystem (3) dazu ausgestaltet ist, die Nachweismoleküle (NG) am Nachweisort (NO) mittels einer geeigneten Beleuchtungsquelle (31) im strömenden Medium zu beleuchten (B) und ein Detektionsmittel (32) zur Aufnahme (AF) der am Nachweisort (NO) beleuchteten Nachweismoleküle (NG) umfasst.

15. Das System nach Anspruch 14,
**dadurch gekennzeichnet,**
**dass** die ersten und zweiten Positionen (P1, P2) so gewählt und die Erzeugungslichtquelle (2) und die Beleuchtungsquelle (31) so ausgestaltet und ausgerichtet sind, dass sich die Nachweismoleküle (NG) zwischen dem Erzeugungsort (EO) und dem Nachweisort (NO) mit dem strömenden Medium zumindest mit gleicher Geschwindigkeitskomponente in der zu untersuchenden Richtung mitbewegen und Teilchengröße und Teilchenfolgevermögen (TFV) der Nachweismoleküle (NG) für das Bestimmen (BS) der Strömungseigenschaften des strömenden Mediums besonders geeignet sind.

16. Das System nach Anspruch 15,
**dadurch gekennzeichnet,**
**dass** die Anlage (1) zur Führung des strömenden Mediums mindestens ein Einlassmittel (5) zur Zugabe geeigneter Additive (GA) in das strömende Medium umfasst, durch die das Nachweismoleküle (NG) wieder in das Molekül (G) zurück umgewandelt werden können, aus dem das Nachweismolekül (NG) durch die Photomodifikation erzeugt wurde, vorzugsweise ist das Einlassmittel (5) an einer Position angeordnet, die geeignet ist, diese Zurückumwandlung nach dem Nachweiszeitpunkt (NT) aber vor einem Niederschlagen der Nachweismoleküle (NG) an Teilen der Anlage (1) für die Leitung des strömenden Mediums zu ermöglichen.
